# EUROPEAN PATENT APPLICATION

(11) **EP 1 734 741 A2**
(43) Date of publication of application: **20.12.2006**
(21) Application number: 05024355.9
(22) Date of filing: 09.11.2005
(51) Int. Cl.: H04N 5/225

(54) **Web camera**

(30) Priority: 13.06.2005 US 150133
(71) Applicant: Top Eight Industrial Corp., Taipei City 114 (TW)
(72) Inventor: Kuo, Claire Lee Jung, Taipei (TW)
(74) Representative: Helms, Joachim

(57) **Abstract**

A webcam includes a lens module having a lens installed onto a circuit board for capturing a video signal, a casing made of a rear casing and a front casing coupled with each other for covering the lens and having a lens hole disposed at a corresponding position of the lens for inputting an image, and a supporting wire made of a flexible wire material and having an end pivotally coupled with the circuit board and the other end including a connector, and the wire material can be curved and bent into a supporting stand, such that the supporting wire can be controlled to adjust the height, direction, and angle of the webcam quickly and conveniently.

## Description

### BACKGROUND OF THE INVENTION

### Field of the Invention

The present invention generally relates webcams, and more particularly to a webcam having a flexible supporting wire, so that the supporting wire can be curved and bent into a supporting stand for erecting the webcam as well as adjusting the height, direction or angle of the webcam to facilitate the capture of images.

### Description of the Related Art

As the development of computer has brought tremendous convenience to our life, and the software and hardware are developed continuously by manufacturers, various different computer peripheral products are introduced constantly to the market.

For example, the computer peripheral such as a webcam or a PC cam is used for videoconferencing over the network. In general, a webcam is connected to a PC through a COM port or a USB port, and an image is transmitted to users through the PC. Therefore, if the webcam is not connected to a PC, the standalone webcam cannot be operated.

More and more people are using webcam for conversation over the network, as the ADSL gets more popular and the video software compression technology advances. For example, services such as videoconferencing or even Internet dating are very convenient. In addition, many instant network communications software such as ICQ or MSN messenger integrate the audio and video functions into the communication software, such that webcam becomes more popular.

At present, the common webcams sold in the market is generally divided into two types: a fixed webcam and a revolving webcam, wherein the fixed webcam comes with a clamp for clamping the lens module at the best position of a display peripheral for capturing a user's image, and the revolving webcam comes with a base, and the lens module is installed in the base and capable of being adjusted to its best angle by turning the webcam, so as to capture the user's image. In view of the two aforementioned webcams, the significant shortcomings reside on their difficulty of meeting user's personal requirements since the stylish design has very little variations. Furthermore, the angle of the two types of webcams is adjusted indirectly in an inconvenient manner, and most of the times, users have difficulties to adjust the position of the webcam to capture an image. Therefore, it is necessary to improve these types of webcams.

### Summary of the Invention

In view of the shortcomings of the prior art, the inventor of the present invention based on years of experience on the design and marketing of the digital image capture devices to conduct extensive researches and experiments to overcome the shortcomings of the prior art webcams and provide an innovative design of changing the positioning and adjusting the mode, and thus greatly lowering the manufacturing cost, and finally invented the webcam in accordance with the present invention.

It is a primary objective of the present invention to provide a webcam that includes a lens module having a lens installed onto a circuit board for capturing a video signal, a casing made of a rear casing and a front casing coupled with each other for covering the lens and having a lens hole disposed at a corresponding position of the lens for inputting an image, and a supporting wire made of a flexible wire material and having an end pivotally coupled with the circuit board and the other end including a connector, and the wire material can be curved and bent into a supporting stand, such that the supporting wire can be controlled to adjust the height, direction, and angle of the webcam quickly and conveniently.

The secondary objective of the present invention is to provide a webcam, wherein the circuit board is coupled to at least one light emitting member, and at least one illuminating hole is disposed on the front casing at a position corresponding to the light emitting member. Further, the circuit board is coupled to a microphone, and at least one sound hole is built on the front casing at a position corresponding to the microphone.

A further objective of the present invention is to provide a webcam, and the rear casing includes a rear casing hole for installing a shutter, such that the shutter can be pressed to trigger the circuit board for capturing video signals.

Another objective of the present invention is to provide a webcam, and the supporting wire includes a signal line wrapped by a flexible material, or a signal line wrapping a flexible material therein.

### BRIEF DESCRIPTION OF THE DRAWINGS

Other features and advantages of the present invention will become apparent in the following detailed description of the preferred embodiments with reference to the accompanying drawings, in which:
FIG. 1 is an exploded view of a webcam according to a first preferred embodiment of the present invention;
FIG. 2 is a front view of an assembled structure as depicted in FIG. 1;
FIG. 3 is an exploded view of a webcam according to a second preferred embodiment of the present invention;
FIG. 4 is a front view of an assembled structure as depicted in FIG. 3;
FIG. 5 is an exploded view of a webcam according to a third preferred embodiment of the present invention;
FIG. 6 is a front view of an assembled structure as depicted in FIG. 5;
FIG. 7 is a cross-sectional view of a supporting wire of the present invention; and
FIG. 8 is a cross-sectional view of a supporting wire according to another preferred embodiment of the present invention.

### DETAILED DESCRIPTION OF THE PREFERRED EMBODIMENTS

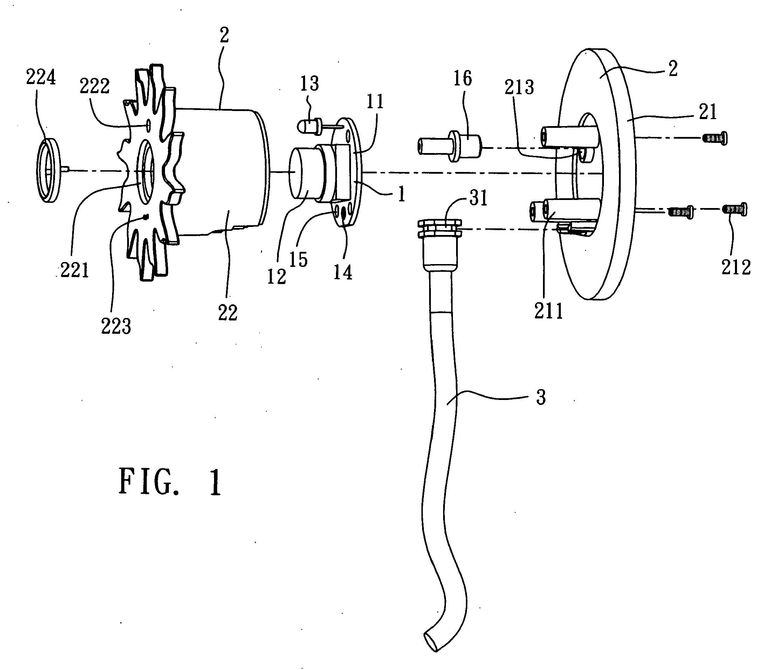

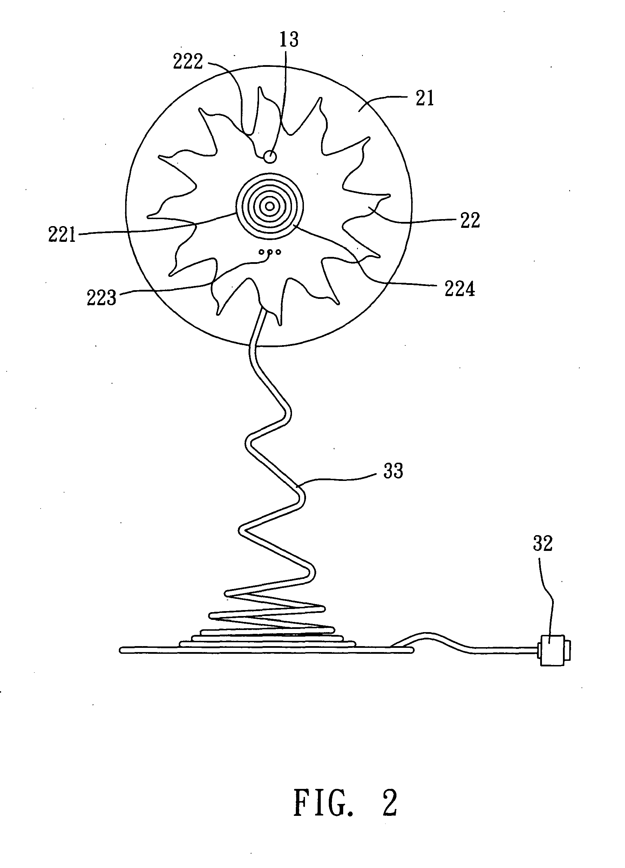

Referring to FIGS. 1 and 2, a webcam in accordance with the present invention comprises a lens module 1, a casing 2 and a supporting wire 3.

The lens module 1 includes a lens 12 fixed and coupled to a printed circuit board (PCB) 11 for capturing an image (video) signal. The circuit board 11 has the prior art components including an image sensor, a sound sensor, an A/D converter, a controller and a network server. In addition, the circuit board 11 is coupled to at least a light emitting member 13 such as a light emitting diode to have the light compensation effect for compensating insufficient light source; and the circuit board 11 is coupled to a sound picker or a microphone 14 for transmitting audio signals.

After the image signals captured by the lens module 1 are inputted by the lens 12 and the sound signals are inputted by the microphone 14, the image sensor (CMOS or CCD sensor) and the sound sensor convert the inputted signals into electric ones, and the A/D converter converts the analog signal into the digital signal, and then an encoder encodes and compresses the digital signal according to a specific encoding standard. With the control of the controller, the network server sends the encoded signals to the local area network or Internet according to a specific network protocol, so that other users can receive the video signals and sound through their computers. Each of the foregoing components is modularized into a unit, and thus will not be described here.

The casing 2 is comprised of a rear casing 21 and a front casing 22 coupled with each other for enclosing the lens module 1 therein. In the figures, the rear casing 21 includes at least one tenon 211 which passes through a fixing hole 15 on the circuit board 11 to coupled with the front casing 22 by a fixture 212 such as a screw. Further, the front casing 22 includes a lens hole 221, at least one illuminating hole 222 and at least one sound hole 223 disposed at the corresponding positions of the lens 12, the light emitting member 13 and a microphone 14 respectively. The lens hole 221 includes a protective cover 224 embedded in the front to protect the lens 12. Further, the rear casing 21 includes a rear cover hole 213 for accommodating a shutter 16, such that when the shutter 16 is pressed to trigger the circuit board 11 for capturing a single image (video) signal as well as saving or transmitting the signal.

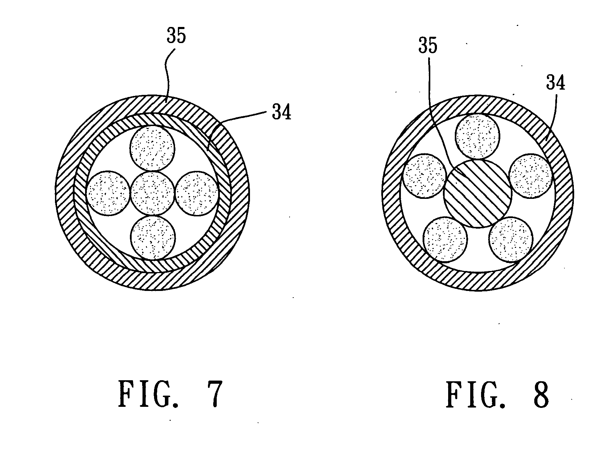

The supporting wire 3 is made of a flexible material, having one end as a pivotal coupling end 31 copuled to the circuit board 11, and the other end including a connector 32 for connecting to a computer port. The supporting wire 3 is preferably a USB interface for simultaneously connecting the signals and the power supply. Referring to FIG 2, since the supporting wire 3 is flexible, therefore the supporting wire 3 can be curved and bent to form a spiral awl supporting stand 33 to facilitate the positioning of the lens module 1 and the casing 2. By the feature of the spiral supporting wire 3, the height, direction and angle of the webcam can be adjusted with varieties. In FIG. 7, the supporting wire 3 of this embodiment is a flexible material wrapped around a signal line 34, including but not limited to a PVC tube capable of being curved and bent. In FIG. 8, a signal line 34 having a flexible material 35 therein such as iron wire or steel wire also has the same effect.

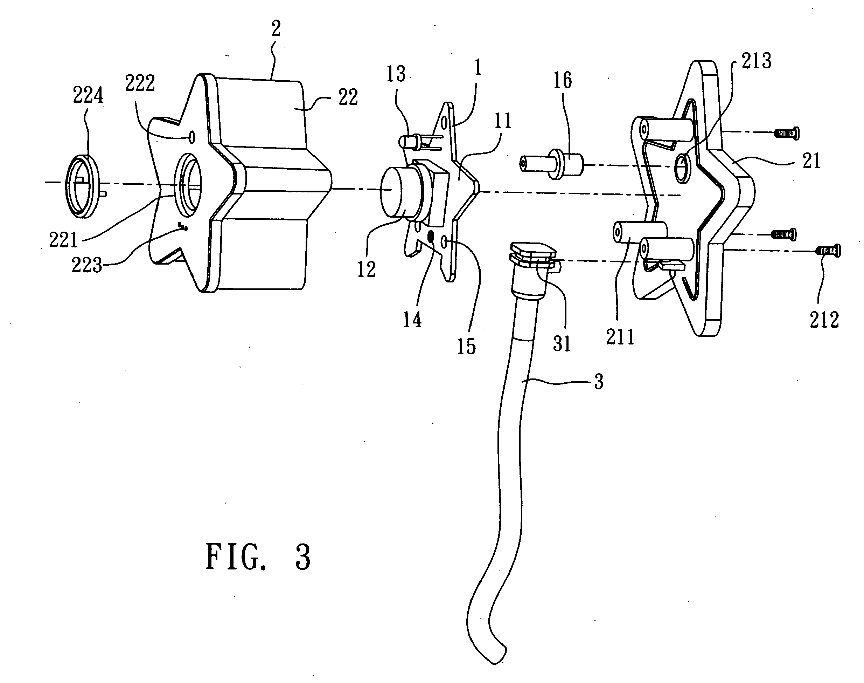

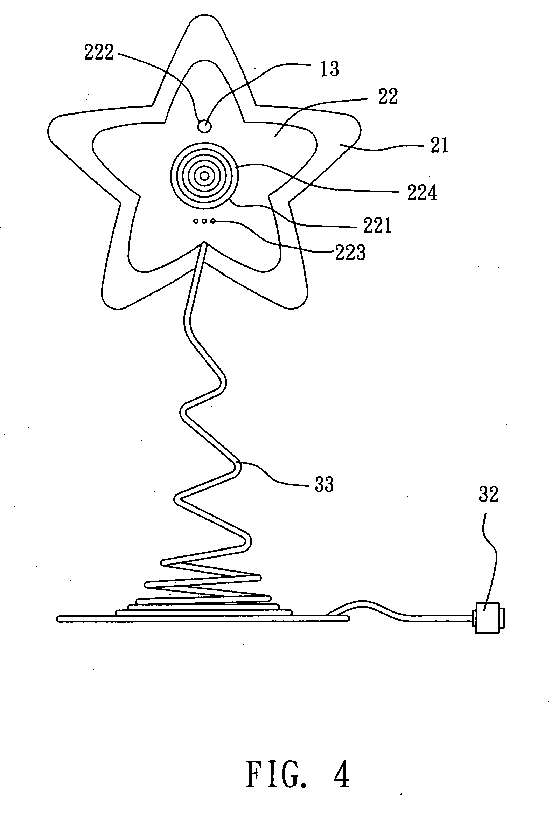

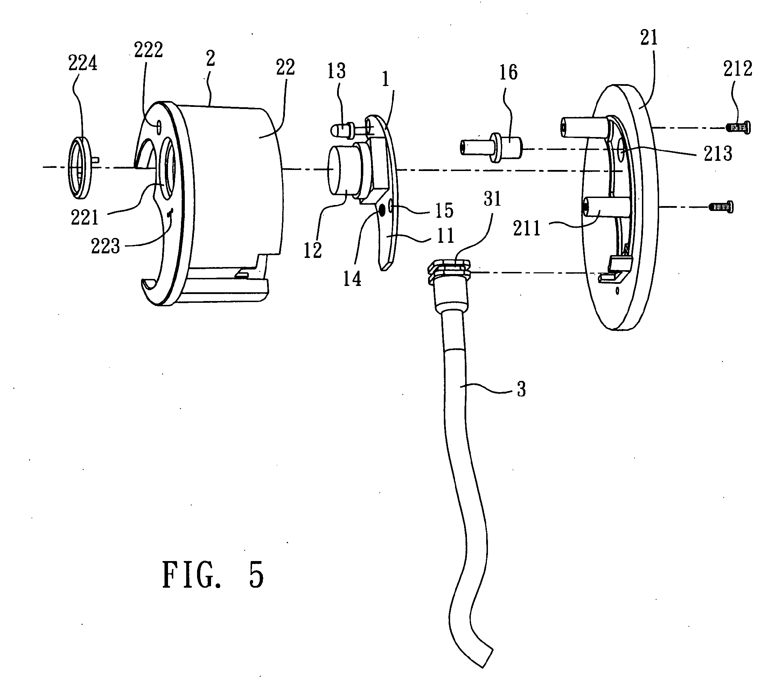

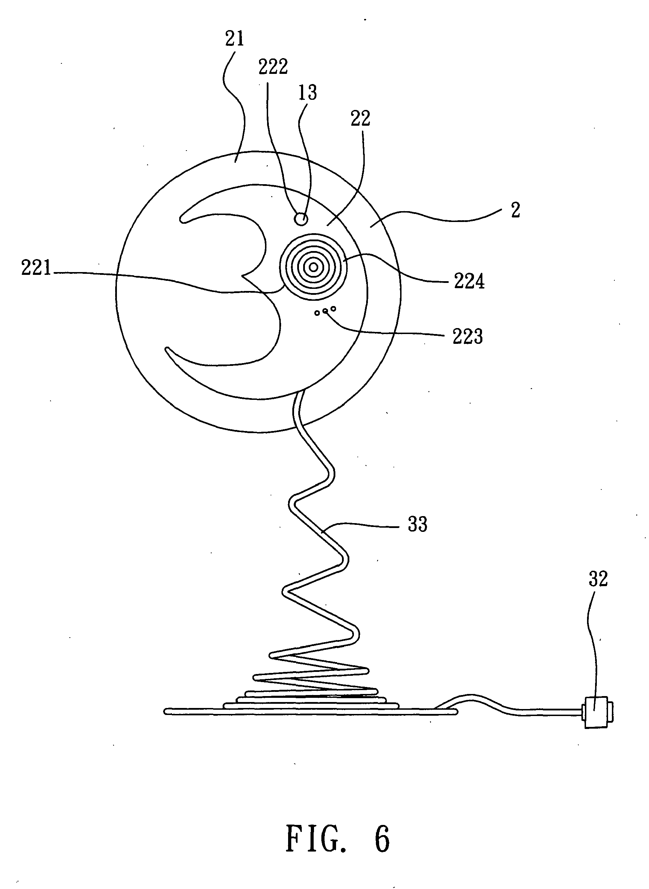

Referring FIGS. 3 to 6, the lens module 1 and the supporting wire 3 adopted in these two embodiments are the same as those described in the previous embodiment, except the stylish appearance of the casing 2. The casing illustrated in FIG. 2 is in the shape of a sun, and the casing illustrated in FIG. 4 is in the shape of a star. Therefore, the embodiments may have a variety of designs to meet user's personal requirements.

According to the foregoing preferred embodiments of the present invention, the webcam can be controlled by the supporting wire to adjust the height, direction and angle of the webcam quickly and conveniently. Since the supporting wire has the feature of being curved and bent, therefore users can have their own stylish design of the supporting stand to meet the user's unique personal style. Further, the casing also may have different variations to meet user's personal requirements.

In summation of the above description, the present invention herein complies with the patent application requirements and is submitted for patent application. However, the description and its accompanied drawings are used for describing preferred embodiments of the present invention, and it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A webcam, comprising:
a lens module, having a lens disposed on a circuit board for capturing an image signal;
a casing, being comprised of a front casing and a rear casing for covering said lens module, and having a lens hole disposed on said front casing at a position corresponding to said lens for inputting an image; and
a supporting wire, being made of a flexible material and having one end pivotally coupled to said circuit board and the other end having a connector, and said wire being curved and bent to form a stand;
such that said supporting wire is controlled to adjust the height, direction and angle of said webcam conveniently and quickly.

2. The webcam of claim 1, wherein said circuit board is coupled to at least one light emitting member and said front casing has at least one illuminating hole disposed at a position corresponding to said light emitting member.

3. The webcam of claim 2, wherein said light emitting member is a light emitting diode.

4. The webcam of claim 1, wherein said circuit board is coupled to a microphone, and said front casing has at least one sound hole disposed at a position corresponding to said microphone.

5. The webcam of claim 1, wherein said rear casing includes at least one inwardly protruded tenon passing through a fixing hole of said circuit board and secured onto said front casing by a fixture.

6. The webcam of claim 1, further comprising a protective cover embedded at the front of said lens hole.

7. The webcam of claim 1, wherein said rear casing includes a rear casing hole for extending a shutter, so that said shutter is pressed to trigger said circuit board for capturing an image signal.

8. The webcam of claim 1, wherein said supporting wire is a USB interface.

9. The webcam of claim 1, wherein said supporting wire is made of wrapping a flexible material around a signal line.

10. The webcam of claim 1, wherein said supporting wire is made of wrapping a flexible material inside a signal line.
